(19) Europäisches Patentamt
European Patent Office
Office européen des brevets

(11) **EP 4 524 825 A1**

(12) **EUROPEAN PATENT APPLICATION**

(43) Date of publication:
**19.03.2025 Bulletin 2025/12**

(21) Application number: **24196649.8**

(22) Date of filing: **27.08.2024**

(51) International Patent Classification (IPC):
*G06N 5/045* (2023.01)    *G06N 20/00* (2019.01)

(52) Cooperative Patent Classification (CPC):
**G06N 20/00; G06N 5/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023 JP 2023150450**

(71) Applicant: **Fujitsu Limited
Kawasaki-shi, Kanagawa 211-8588 (JP)**

(72) Inventors:
• **YOKOTA, Takuya
  Kawasaki-shi, Kanagawa (JP)**
• **NAKAO, Yuri
  Kawasaki-shi, Kanagawa (JP)**

(74) Representative: **Hoffmann Eitle
Patent- und Rechtsanwälte PartmbB
Arabellastraße 30
81925 München (DE)**

(54) **INFORMATION PROCESSING PROGRAM, INFORMATION PROCESSING METHOD, AND INFORMATION PROCESSING DEVICE**

(57)    An information processing program for causing a computer to execute a process includes acquiring an evaluation result that indicates evaluation for each of a plurality of indexes in a machine learning model, clustering the evaluation result for each combination pattern of the plurality of indexes, calculating a variance of the evaluation results in a cluster for each combination pattern, determining a combination pattern that satisfies a predetermined condition, from among a plurality of the combination patterns, based on the calculated variance of the evaluation results, aggregating the evaluation for each of the plurality of indexes for each cluster, based on the evaluation result included in each cluster obtained by performing clustering on the determined combination pattern, and determining a solution for each of the plurality of indexes in the machine learning model based on the aggregated evaluation for each of the plurality of indexes.

FIG. 1

## Description

FIELD

An embodiment discussed herein is related to an information processing program, an information processing method, and an information processing device.

BACKGROUND

Typically, there is an information processing system that assists decision making of loan examiners and recruiters using a machine learning model (hereinafter, model), in decision making of people such as loan examination or human resources recruitment. This information processing system outputs a determination result (availability of loan or employment) obtained by inputting a case to be determined into the model trained using results in past cases (availability of loan or employment) as training data.

There is a problem that a bias according to race, gender, or the like intervenes in the output from the information processing system. Such a bias can be reduced by tuning the model using performance indexes and fairness indexes. However, it is important to perform tuning so that all stakeholders affected by the system can understand.

Regarding such model tuning, there is related art for aggregating preference information by majority voting and considering various preferences of the stakeholders affected by the system, by using this aggregation result for tuning.

Citation List

Paten Literature

Japanese Laid-open Patent Publication No. 2015-87966, Japanese Laid-open Patent Publication No. 2013-101700, Japanese Laid-open Patent Publication No. 2007-172427, U.S. Patent Application Publication No. 2023/0024361, U.S. Patent Application Publication No. 2016/0180451

SUMMARY OF INVENTION

TECHNICAL PROBLEM

However, with the above related art, the majority voting results wasted votes. Therefore, preferences of stakeholders (for example, women with less cases of loan examination, disabled people with a small number of job seekers, or the like) having minority opinions are excluded. Therefore, the related art has a problem in that it is difficult to tune the model so that all the stakeholders including the stakeholder having minority opinions understand.

In one aspect, an object is to provide an information processing program, an information processing method, and an information processing device that can properly tune a model.

SOLUTION TO PROBLEM

According to an aspect of the embodiments, an information processing program for a computer to execute a processing includes acquiring an evaluation result that indicates evaluation for each of a plurality of indexes in a machine learning model, clustering the evaluation result for each combination pattern of the plurality of indexes, calculating a variance of the evaluation results in a cluster for each combination pattern, determining a combination pattern that satisfies a predetermined condition, from among a plurality of the combination patterns, based on the calculated variance of the evaluation results, aggregating the evaluation for each of the plurality of indexes for each cluster, based on the evaluation result included in each cluster obtained by performing clustering on the determined combination pattern, and determining a solution for each of the plurality of indexes in the machine learning model based on the aggregated evaluation for each of the plurality of indexes.

ADVANTAGEOUS EFFECTS OF INVENTION

According to an embodiment, it is possible to properly tune a model.

BRIEF DESCRIPTION OF DRAWINGS

FIG. 1 is a block diagram illustrating a configuration example of an information processing system according to an embodiment;

FIG. 2 is a flowchart illustrating an operation example of the information processing system according to the embodiment;

FIG. 3 is an explanatory diagram for explaining an outline of model training;

FIG. 4 is an explanatory diagram for explaining an outline of a questionnaire;

FIG. 5 is an explanatory diagram for explaining an outline of clustering calculation;

FIG. 6 is an explanatory diagram for explaining an outline of Euclidean distance calculation;

FIG. 7 is an explanatory diagram for explaining an outline of intra-cluster variance calculation;

FIG. 8 is an explanatory diagram for explaining an outline of intra-cluster variance average minimum value calculation;

FIG. 9 is an explanatory diagram for explaining an outline of intra-cluster preference value calculation;

FIG. 10 is an explanatory diagram for explaining an outline of cluster overall preference value calculation;

FIG. 11 is an explanatory diagram for explaining an outline of an index parameter set; and

FIG. 12 is an explanatory diagram for explaining an example of a computer configuration.

DESCRIPTION OF EMBODIMENTS

Hereinafter, an information processing program, an information processing method, and an information processing device according to an embodiment will be described with reference to the drawings. Configurations having the same functions in the embodiment are denoted by the same reference signs, and redundant description will be omitted. Note that the information processing program, the information processing method, and the information processing device to be described in the following embodiment are to merely indicate examples and do not limit the embodiment. Furthermore, each embodiment below may be appropriately combined within the scope of no contradiction.

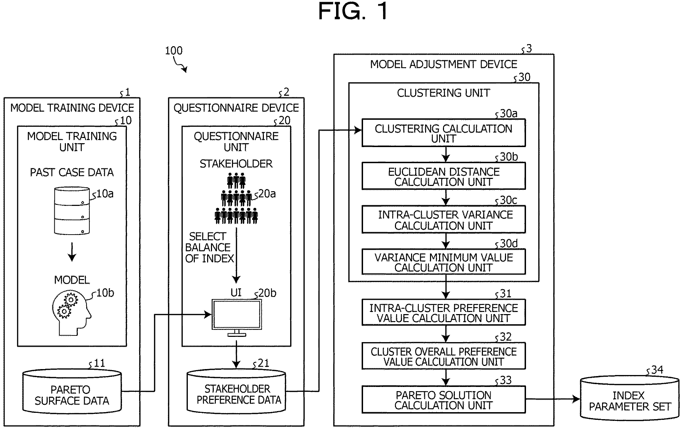

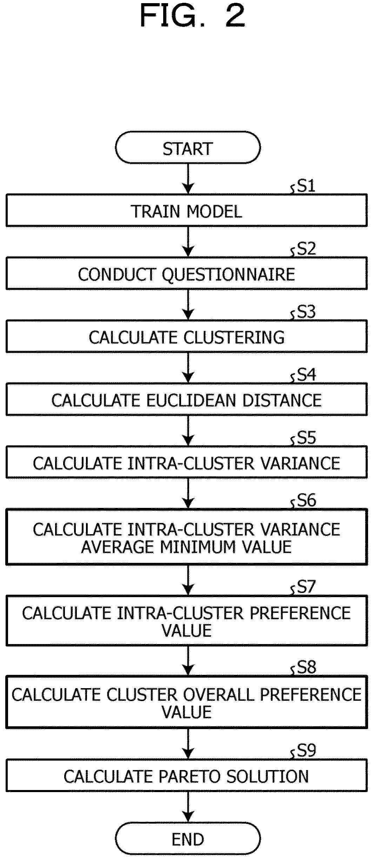

FIG. 1 is a block diagram illustrating a configuration example of an information processing system according to the embodiment. FIG. 2 is a flowchart illustrating an operation example of the information processing system according to the embodiment.

As illustrated in FIG. 1, an information processing system 100 includes a model training device 1, a questionnaire device 2, and a model adjustment device 3. In the information processing system 100, the model training device 1, the questionnaire device 2, and the model adjustment device 3 operate, for example, as in the flowchart (S1 to S9) illustrated in FIG. 2, so as to tune a model 10b, in consideration of various preferences of an stakeholder 20a.

Note that the model 10b according to the present embodiment is a machine learning model trained using past case data 10a as teacher data, in order to assist decision making of a recruiter. Specifically, by inputting data of a job seeker, the model 10b outputs a determination result of whether or not to be employed, regarding whether or not a plurality of indexes (for example, age, history, desired annual income, or the like) satisfies employment criteria. The model 10b is not limited to a model that assists the decision making of the recruiter, and for example, may be applied to a machine learning model trained to assist decision making (availability of loans) of an examiner in loan examination.

The stakeholder 20a in the decision making of the recruiter using the past case data 10a includes a job seeker or the like, in addition to the recruiter.

As an example, the recruiter has a preference to minimize a possibility that a job seeker who does not satisfy the employment criteria is mistakenly employed (desire to minimize false-positive probability, desire to maximize specificity index). Furthermore, the job seeker has a preference that the job seeker does not desire to be mistakenly determined to be unemployed even though the job seeker satisfies the employment criteria (desire to minimize false-positive probability, desire to maximize sensitivity index). In this way, the stakeholder 20a has various preferences among individuals.

Therefore, the information processing system 100 tunes the model 10b in consideration of the preference of each of the recruiter and the job seeker included in the stakeholder 20a.

Note that, in the present embodiment, the information processing system 100 including the plurality of information processing devices including the model training device 1, the questionnaire device 2, and the model adjustment device 3 are exemplified. However, the information processing system 100 may have a configuration in which a single information processing device executes processing of the model training device 1, the questionnaire device 2, and the model adjustment device 3.

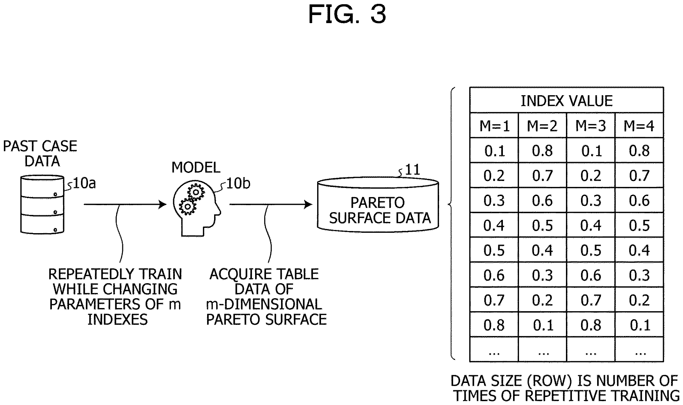

The model training device 1 includes a model training unit 10 and trains the model 10b (S1). FIG. 3 is an explanatory diagram for explaining an outline of model training.

As illustrated in FIG. 3, the model training unit 10 is a processing unit that performs machine learning of the model 10b, based on the past case data 10a associated with the data of the job seeker (age, history, desired annual income, or the like) and the result of whether or not to be employed.

Specifically, the model training unit 10 performs machine learning of the model 10b while repeatedly adjusting a trade-off relationship between a plurality of indexes M (M = 1, 2, ..., m) such as the age, the history, or the desired annual income, based on the past case data 10a and forms an m-dimensional Pareto surface (multi-objective optimization).

The multi-objective optimization problem in machine learning of the model 10b can be defined as the following formula (1).
[Expression 1]

$$\min_{x \in X}(f_1(x), f_2(x), \dots, f_k(x)) \qquad \cdots (1)$$

Here, $f_k(x)$ is an objective function, k (k ≥ 2) represents the number of objective functions, and X represents a matrix of options (matrix of plurality of indexes in repetitive training using past case data 10a).

Since it is not possible to simultaneously optimize all the objective functions in the multi-objective optimization problem, attention is paid to an answer set that is Pareto optimum.

When the following formula (2) and formula (3) are satisfied, a feasible solution $x_1 \in X$ performs Pareto control on $x_2 \in X$.
[Expression 2]

$$\forall_i \in \{1, \dots, k\}, f_1(x) \le f_2(x) \qquad \cdots (2)$$

[Expression 3]

$$\exists_i \in \{1, \dots, k\}, f_1(x) < f_2(x) \qquad \cdots (3)$$

In a case where an argument $x_* \in X$ is not dominated by any other solution (Pareto optimum), an answer set $X_*$ is referred to as a Pareto surface.

The model training unit 10 acquires table data (Pareto surface data 11) of the m-dimensional Pareto surface (answer set) regarding a plurality of indexes, by machine learning of the model 10b using the past case data 10a.

Returning to FIGs. 1 and 2, the questionnaire device 2 includes a questionnaire unit 20, and acquires an evaluation result indicating evaluation (preference) to each of the plurality of indexes M (M = 1, 2, ..., m) of the machine learning model (model 10b), by conducting a questionnaire to the stakeholder 20a (S2). Note that the stakeholder 20a who conducts the questionnaire is a person randomly selected from among persons registered as a user of the model 10b in advance (recruiter or job seeker) or the like.

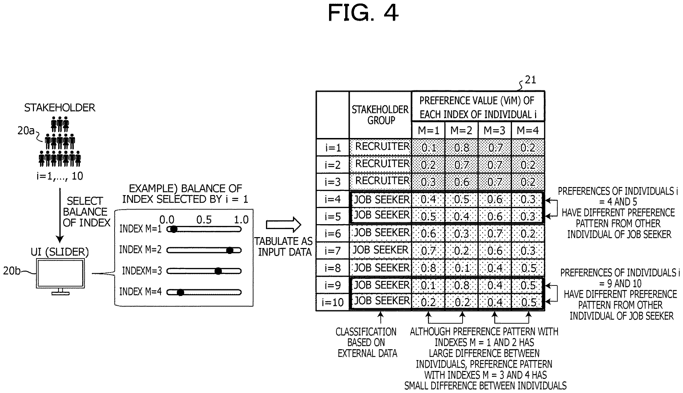

FIG. 4 is an explanatory diagram for explaining an outline of the questionnaire. As illustrated in FIG. 4, the questionnaire unit 20 receives the evaluation (preference) to each of the plurality of indexes M (M = 1, 2, 3, 4), by an operation input (slider operation or the like) from the stakeholder 20a via a user interface (UI) 20b. Specifically, the questionnaire unit 20 receives a preference value of each index between 0.0 and 1.0 from each person of the stakeholder 20a (i = 1, ..., 10).

Here, a preference value (evaluation value) of an individual (i) to each index M is referred to as $V_{iM}$. The questionnaire unit 20 tabulates input data of the preference value $V_{iM}$ acquired from each person of the questionnaire unit 20 and sets the input data as stakeholder preference data 21.

In the stakeholder preference data 21, an stakeholder group of the recruiter/job seeker at the time of user registration and the preference value $V_{iM}$ to each index M (M = 1, 2, 3, 4) are indicated, for each individual (i) of the stakeholder 20a.

In the stakeholder preference data 21 in the illustrated example, preferences of individuals i = 4 and 5 and preferences of individuals i = 9 and 10 have a selection pattern different from other individuals of the job seeker. For example, although a preference pattern of the individuals i = 9 and 10 has a large difference between the individuals with the indexes M = 1 and 2, the difference between the individuals is small with the indexes M = 3 and 4.

Returning to FIGs. 1 and 2, the model adjustment device 3 includes a clustering unit 30, an intra-cluster preference value calculation unit 31, a cluster overall preference value calculation unit 32, and a Pareto solution calculation unit 33.

The clustering unit 30 clusters the evaluation result (preference value $V_{iM}$ of individual i) for each combination pattern of the plurality of indexes, using K-means clustering. The clustering unit 30 calculates a variance of the evaluation results in each cluster by this clustering, and determines a pattern that minimizes the variance. In this way, it is assumed that the clustering unit 30 select the plurality of indexes, by determining the pattern that minimizes the variance of the evaluation results in each cluster and use a clustering result of which consistency in the cluster is the highest (the lowest variance).

In this way, it is possible to accurately group (cluster) individuals having similar preference patterns, by using the clustering result of which the consistency in the cluster is the highest (the lowest variance).

For example, assuming that it is not possible for an individual to express a preference in consideration of a balance relationship of all indexes, it can be assumed that there be an index that is not considered by many people (not important).

Furthermore, in a case where all the indexes are used in aggregation by clustering, the unimportant index serves as noise, and individuals having different preference patterns are mixed in the cluster, that is, the consistency of the preference in the cluster is lowered.

Therefore, by creating the plurality of patterns as changing the indexes used for clustering and adopting a combination pattern of indexes that makes the consistency in the cluster be the highest, similarity between the preference patterns of the individuals in the cluster can be maximized. Therefore, it is possible to accurately model an stakeholder subgroup. That is, it is possible to accurately cluster the individuals (few) having the similar preference patterns and to properly reflect minority opinions.

Specifically, the clustering unit 30 includes a clustering calculation unit 30a, a Euclidean distance calculation unit 30b, an intra-cluster variance calculation unit 30c, and a variance minimum value calculation unit 30d.

The clustering calculation unit 30a is a processing unit that performs clustering calculation (S3) for clustering the evaluation result (preference value $V_{iM}$) for each combination pattern of the plurality of indexes M (M = 1, 2, ..., m), using the K-means clustering.

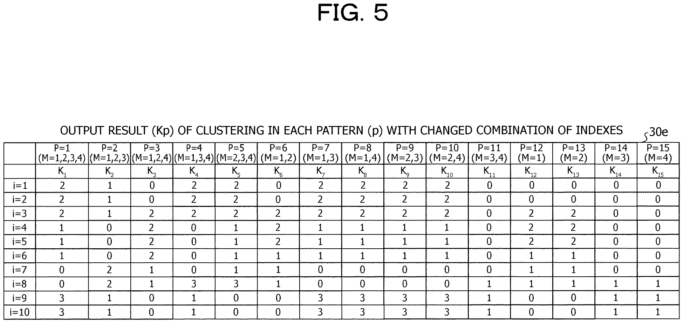

FIG. 5 is an explanatory diagram for explaining an outline of the clustering calculation. As illustrated in FIG. 5, the clustering calculation unit 30a performs the K-means clustering in each of patterns (p) with a changed combination of the plurality of indexes M (M = 1, 2, 3, 4).

For example, in the K-means clustering, the clustering calculation unit 30a selects k points as initial center points in a feature space. In the feature space, the preference values of the plurality of indexes of machine learning (that is, preference values $V_{iM}$ to M = 1, 2, 3, 4) are used. Next, the clustering calculation unit 30a forms a cluster by assigning the preference value of each person (i) to the closest center point. Next, the clustering calculation unit 30a replaces the center point of each cluster with a center of a point belonging to each center point. Then, the clustering calculation unit 30a repeats the formation of the cluster and the calculation of the center point, until a position of the center point does not move.

The total number of combination patterns pis $p = \Sigma^m_{r=1} {}_mC_{m-r+1}$ The individual (i) is assigned to any one cluster in all the patterns. The number of clusters k is determined by a known elbow method from among a plurality of candidates.

By performing clustering by the clustering calculation unit 30a, k (cluster number K = 1, ..., k) clusters are made for each pattern number P (P = 1, ..., p). The cluster of each pattern is referred to as $K_p$.

In a calculation result 30e in the illustrated example, since the number of indexes m = 4, the total number of patterns is p = 15. Furthermore, as an output example of $K_p$, when P = 1 (M = 1, 2, 3, 4), the individual (i) is classified into four clusters of $K_1$ = 0, 1, 2, 3.

Returning to FIGs. 1 and 2, the Euclidean distance calculation unit 30b is a processing unit that calculates a Euclidean distance between an average value of the preference values of all the individuals included in the stakeholder preference data 21 and the preference value of each individual (S4).

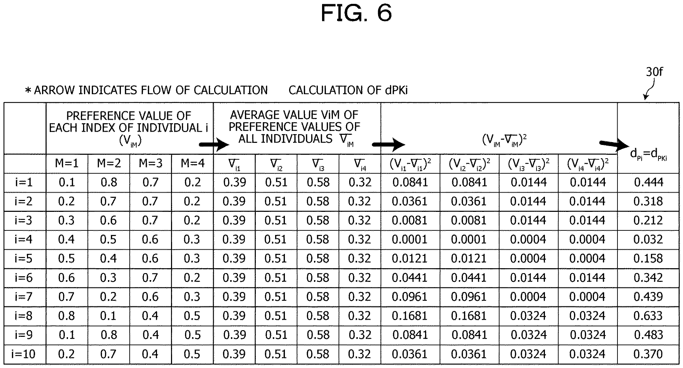

FIG. 6 is an explanatory diagram for explaining an outline of Euclidean distance calculation. As illustrated in FIG. 6, the Euclidean distance calculation unit 30b acquires the preference values ($V_{iM}$) of all the individuals included in the stakeholder preference data 21. Next, the Euclidean distance calculation unit 30b calculates an average value ($V_{iM}$ (upper bar)) of the preferences of all the individuals, and obtains a calculation result 30f of a Euclidean distance ($d_{pi}$) between the average value and the preference values ($V_{iM}$) of all the individuals.

Here, the calculation of the Euclidean distance is as in the following formula (4), and the calculation of the average value is as in the following formula (5).

[Expression 4]

$$d_{Pi} = \sqrt{\sum_{M=1}^{m} (V_{iM} - \overline{V_{iM}})^2} \quad \cdots (4)$$

[Expression 5]

$$\overline{V_{iM}} = \frac{1}{n} \sum_{i=1}^{n} V_{iM} \qquad \cdots (5)$$

Note that the Euclidean distance ($d_{pi}$) of the individual in the cluster $K_p$ is assumed to be $d_{PK}$. This $d_{PK}$ takes a common value in any pattern.

Returning to FIGs. 1 and 2, the intra-cluster variance calculation unit 30c is a processing unit that calculates the variance of the evaluation results in the cluster for each combination pattern (S5).

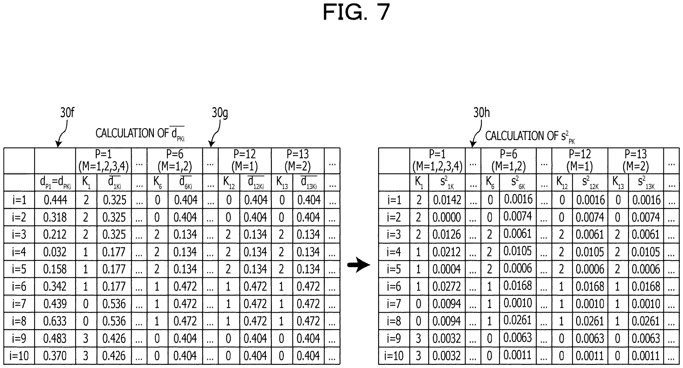

FIG. 7 is an explanatory diagram for explaining an outline of intra-cluster variance calculation. As illustrated in FIG. 7, the intra-cluster variance calculation unit 30c obtains a calculation result 30h of a variance value of $d_{PKi}$ of the individuals in each cluster, as in the following formula (6).

[Expression 6]

$$s^2{}_{PK} = \frac{1}{n} \sum_{i=1}^{n} (d_{PKi} - \overline{d_{PKi}})^2 \qquad \cdots (6)$$

The upper bar $d_{PK}$ is an average value of $d_{PK}$ of all the individuals in the cluster, and a calculation result 30g of the average value can be obtained as in the following formula (7).

[Expression 7]

$$\overline{d_{PKi}} = \frac{1}{n} \sum_{i=1}^{n} d_{PKi} \qquad \cdots (7)$$

Returning to FIGs. 1 and 2, the variance minimum value calculation unit 30d determines a combination pattern that satisfies a predetermined condition from among the plurality of combination patterns, based on the variance of the evaluation results calculated by the intra-cluster variance calculation unit 30c. Specifically, the variance minimum value calculation unit 30d performs intra-cluster variance average minimum value calculation (S6) and determines a pattern with the minimum variance, from among the plurality of combination patterns. Note that the variance minimum value calculation unit 30d may select and determine the pattern from among a plurality of patterns of which a variance is equal to or less than a predetermined threshold.

In a case of determining a pattern from among the plurality of patterns with the minimum variance or the plurality of patterns of which the variance is equal to or less than the predetermined threshold, the variance minimum value calculation unit 30d may select a predetermined pattern based on the number of indexes included in the pattern.

For example, the pattern of which the number of indexes is large is highly likely to have a positive-negative proportional relationship, an inverse proportional relationship, or the like between the indexes. At this time, in a pattern holding more information regarding the relationship between the indexes (pattern of which the number of indexes is large), the number of elements for explaining a preference pattern of the stakeholder group is large. Therefore, in a case of determining the pattern from among the plurality of patterns, the variance minimum value calculation unit 30d selects the pattern of which the number of indexes is large.

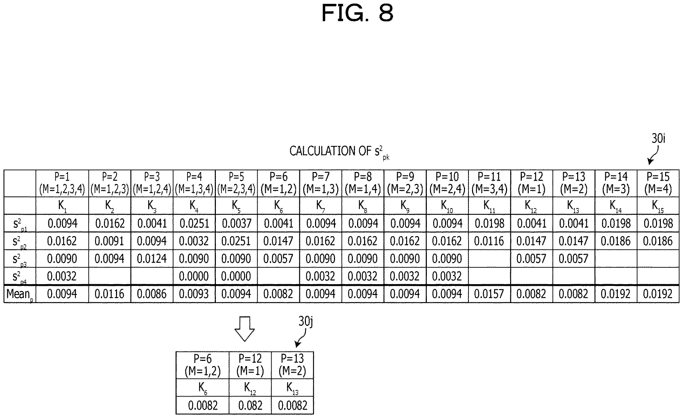

FIG. 8 is an explanatory diagram for explaining an outline of the intra-cluster variance average minimum value calculation. As illustrated in FIG. 8, the variance minimum value calculation unit 30d obtains a calculation result 30i of a variance value $Mean_p$ of each pattern, by performing calculation as in the following formula (8).

[Expression 8]

$$Mean_p = \frac{1}{k} \sum_{K=1}^{k} s^2{}_{PK} \qquad \cdots (8)$$

Next, the variance minimum value calculation unit 30d determines a pattern p to be argmin $Mean_p$ from among all the patterns, and obtains the calculation result 30i. In the illustrated example, three patterns (P = 6, 12, 13) are obtained with an equal ratio, as the calculation result 30i. The variance minimum value calculation unit 30d determines the pattern (P = 6) of which the number of indexes is large from among the three patterns, as described above.

Returning to FIGs. 1 and 2, the intra-cluster preference value calculation unit 31 is a processing unit that calculates a preference (evaluation) for each of the plurality of indexes for each cluster, based on the preference result included in each cluster obtained by clustering performed on the determined combination pattern. Specifically, the intra-cluster preference value calculation unit 31 performs intra-cluster preference value calculation (S7), calculates an average value of the preference values of the individuals (i) in each cluster for all the indexes, and calculates an average value of each cluster.

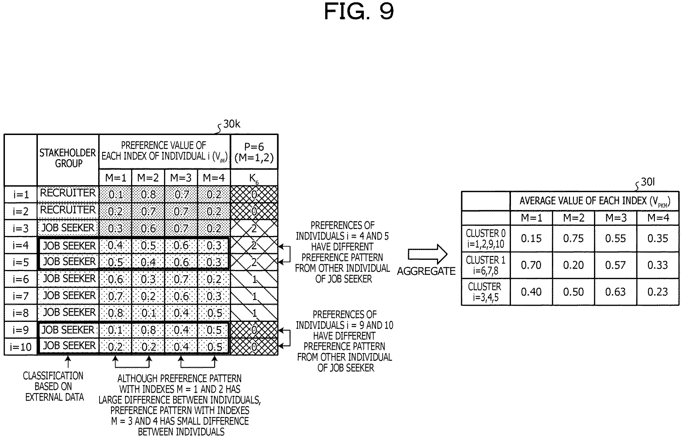

FIG. 9 is an explanatory diagram for explaining an outline of the intra-cluster preference value calculation. As illustrated in FIG. 9, the intra-cluster preference value calculation unit 31 obtains a calculation result 30k obtained by merging the stakeholder preference data 21 and the clustering result (P = 6 (M = 1, 2)) by the clustering unit 30. Next, the intra-cluster preference value calculation unit 31 calculates the average value of the preference values of the individuals (i) in each cluster, for all the indexes and obtains a calculation result 30l in which each average value of each cluster is set to $V_{PKM}$.

Returning to FIGs. 1 and 2, the cluster overall preference value calculation unit 32 is a processing unit that performs cluster overall preference value calculation (S8) that aggregates the preference values of all the clusters.

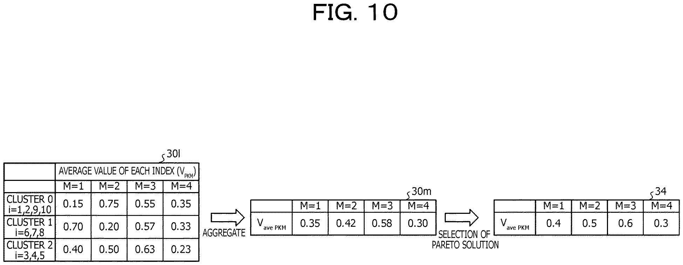

FIG. 10 is an explanatory diagram for explaining an outline of the cluster overall preference value calculation. As illustrated in FIG. 10, the cluster overall preference value calculation unit 32 obtains a geometric mean of $V_{PKM}$ for each index, based on the calculation result 30l and obtains a calculation result 30m to be $V_{avePKM}$, that is, the aggregated evaluation result.

Returning to FIGs. 1 and 2, the Pareto solution calculation unit 33 is a processing unit that performs Pareto solution calculation (S9) for determining a solution of each of the plurality of indexes in the model 10b, based on the calculation result 30m.

Specifically, as illustrated in FIG. 10, the Pareto solution calculation unit 33 selects a Pareto solution of which a Euclidean distance to $V_{ave\ PKM}$ in the calculation result 30m is the smallest, from among the answer set of the m-dimensional Pareto surface included in the Pareto surface data 11. This Pareto solution is a parameter set for tuning the model 10b in consideration of the preference of each stakeholder 20a. The Pareto solution calculation unit 33 outputs an index parameter set 34 including each index value of the selected Pareto solution as data for tuning of the model 10b.

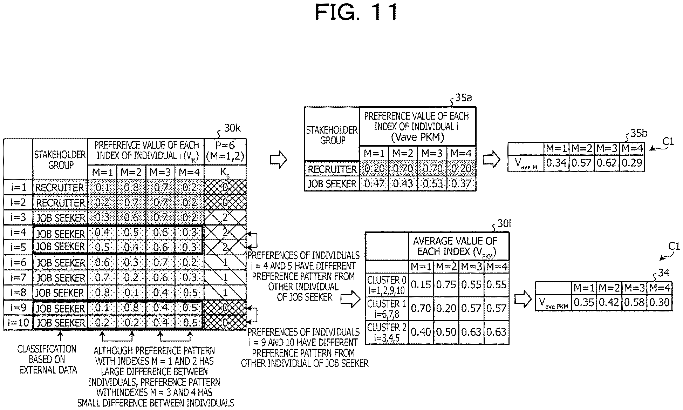

FIG. 11 is an explanatory diagram for explaining an outline of the index parameter set. A case C1 in FIG. 11 is a case in which preference values are simply aggregated in an stakeholder group of each of recruiters and job seekers and the data for tuning of the model 10b is calculated. The case C1 is a case where the data for tuning of the model 10b is calculated in the present embodiment described above.

As illustrated in FIG. 11, in the case C1, a calculation result 35b for tuning of the model 10b is obtained, based on a calculation result 35a obtained by simply aggregating the preference values in the stakeholder group of each of the recruiters and the job seekers. Therefore, in the case C1, the preferences of the individuals i = 4 and 5 and i = 9 and 10 are affected by a difference in the number of people caused by other stakeholders, and are reflected too small in the calculation result 35b.

On the other hand, in a case C2, the preferences of the individuals i = 4 and 5 and i = 9 and 10 are not affected by the difference in the number of people by the other stakeholders (with same weight as other clusters), and are reflected on the index parameter set 34.

As described above, the information processing system 100 acquires the evaluation result indicating the evaluation for each of the plurality of indexes in the machine learning model (model 10b). The information processing system 100 clusters the evaluation result for each combination pattern of the plurality of indexes. The information processing system 100 calculates the variance of the evaluation results in the cluster for each combination pattern. The information processing system 100 determines the combination pattern that satisfies the predetermined condition from among the plurality of combination patterns, based on the calculated variance of the evaluation results. The information processing system 100 aggregates the evaluation for each of the plurality of indexes for each cluster, based on the evaluation result included in each cluster obtained by performing clustering performed on the determined combination pattern. The information processing system 100 determines the solution of each of the plurality of indexes in the model 10b based on the aggregated evaluation for each of the plurality of indexes.

As a result, the information processing system 100 can obtain the solution properly reflecting even a small number of evaluation results and can properly tune the model.

Furthermore, the information processing system 100 determines the pattern with the minimum variance of the evaluation results from among the plurality of combination patterns. As a result, the information processing system 100 can determine the solution for each of the plurality of indexes in the model 10b, based on the clustering result of which the consistency in the cluster is the highest.

Furthermore, the information processing system 100 determines the solution having a Euclidean distance close to the evaluation for each of the plurality of indexes, from among the answer set (Pareto surface data 11) of each of the plurality of indexes in the model 10b. As a result, the information processing system 100 can obtain the solution closer to the evaluation for each of the plurality of indexes.

Furthermore, the evaluation result of the information processing system 100 is a questionnaire result for a person (stakeholder 20a) related to determination using the model 10b. As a result, the information processing system 100 can tune the model reflecting an opinion of the person related to the determination using the model 10b.

Note that each of the illustrated components in each of the devices is not necessarily physically configured as illustrated in the drawings. In other words, the specific aspects of distribution and integration of the respective devices are not limited to the illustrated aspects, and all or some of the devices can be functionally or physically distributed and integrated in any unit in accordance with various loads, use status, and the like.

Furthermore, all or any part of various processing functions of the model training unit 10, the questionnaire unit 20, the clustering unit 30, the intra-cluster preference value calculation unit 31, the cluster overall preference value calculation unit 32, and the Pareto solution calculation unit 33 performed by the model training device 1, the questionnaire device 2, and the model adjustment device 3 may be executed by a central processing unit (CPU) (or microcomputer such as micro processing unit (MPU) or micro controller unit (MCU)). Furthermore, it is needless to say that all or any part of various processing functions may be executed on a program analyzed and executed by a CPU (or microcomputer such as MPU or MCU) or on hardware by wired logic. Furthermore, various processing functions performed by the model training device 1, the questionnaire device 2, and the model adjustment device 3 may be executed by an information processing device (computer) such as a single server device or may be executed by a plurality of computers in cooperation by cloud computing.

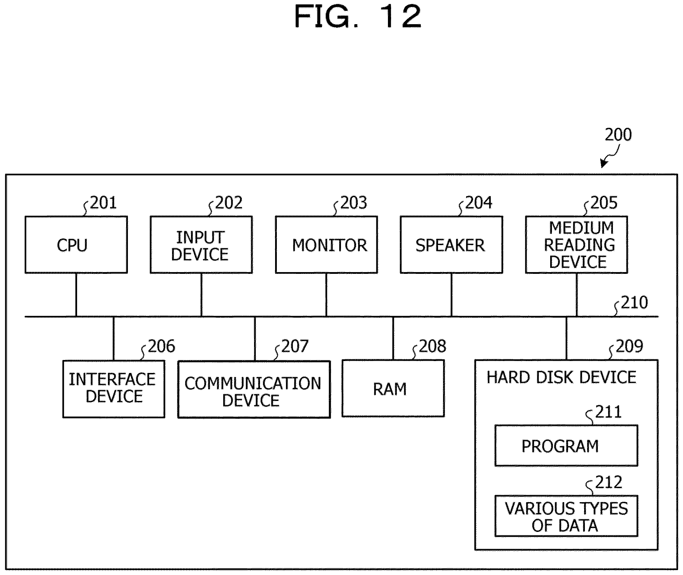

Meanwhile, the various types of processing described in the above embodiment can be implemented by execution of a program, prepared in advance, on a computer. Thus, hereinafter, an exemplary computer configuration (hardware) that executes a program having functions similar to the above embodiment will be described. FIG. 12 is an explanatory diagram for explaining an example of a computer configuration.

As illustrated in FIG. 12, a computer 200 includes a CPU 201 that executes various type of arithmetic processing, an input device 202 that receives a data input, a monitor 203, and a speaker 204. Furthermore, the computer 200 includes a medium reading device 205 that reads a program or the like from a storage medium, an interface device 206 to be coupled to various devices, and a communication device 207 to be coupled to and communicate with an external device in a wired or wireless manner. Furthermore, the computer 200 also includes a random access memory (RAM) 208 that temporarily stores various types of information, and a hard disk device 209. Furthermore, each of the units (201 to 209) in the computer 200 is coupled to a bus 210.

The hard disk device 209 stores a program 211 for executing various types of processing of the functional configurations described in the above embodiment (for example, model training unit 10, questionnaire unit 20, clustering unit 30, intra-cluster preference value calculation unit 31, cluster overall preference value calculation unit 32, and Pareto solution calculation unit 33). Furthermore, the hard disk device 209 stores various types of data 212 that the program 211 refers to. The input device 202 receives, for example, an input of operation information from an operator. The monitor 203 displays, for example, various screens to be operated by the operator. For example, a printing device and the like are coupled to the interface device 206. The communication device 207 is coupled to a communication network such as a local area network (LAN), and exchanges various types of information with an external device via the communication network.

The CPU 201 reads the program 211 stored in the hard disk device 209 and develops and executes the program 211 on the RAM 208 so as to execute various types of processing regarding the above functional configurations (for example, model training unit 10, questionnaire unit 20, clustering unit 30, intra-cluster preference value calculation unit 31, cluster overall preference value calculation unit 32, and Pareto solution calculation unit 33). Note that the program 211 does not have to be stored in the hard disk device 209. For example, the program 211 stored in a storage medium readable by the computer 200 may be read and executed. The storage medium readable by the computer 200 corresponds to, for example, a portable recording medium such as a compact disc read-only memory (CD-ROM), a digital versatile disc (DVD), or a universal serial bus (USB) memory, a semiconductor memory such as a flash memory, a hard disk drive, or the like. Furthermore, the program 211 may be prestored in a device coupled to a public line, the Internet, the LAN, or the like, and the computer 200 may read the program 211 from such a device to execute it.

**Claims**

1. An information processing program for causing a computer to execute a processing comprising:

   acquiring an evaluation result that indicates evaluation for each of a plurality of indexes in a machine learning model;
   clustering the evaluation result for each combination pattern of the plurality of indexes;
   calculating a variance of the evaluation results in a cluster for each combination pattern;
   determining a combination pattern that satisfies a predetermined condition, from among a plurality of the combination patterns, based on the calculated variance of the evaluation results;
   aggregating the evaluation for each of the plurality of indexes for each cluster, based on the evaluation result included in each cluster obtained by performing clustering on the determined combination pattern; and determining a solution for each of the plurality of indexes in the machine learning model based on the aggregated evaluation for each of the plurality of indexes.

2. The information processing program according to claim 1, wherein
the processing of determining the combination pattern determines a pattern with a minimum variance of the evaluation results from among the plurality of combination patterns.

3. The information processing program according to claim 1, wherein
the processing of determining the solution determines a solution that has a Euclidean distance close to the evaluation for each of the plurality of indexes, from among an answer set of each of the plurality of indexes in the machine learning model.

4. The information processing program according to claim 1, wherein
the evaluation result is a questionnaire result for a person related to determination by using the machine learning model.

5. An information processing method implemented by a computer, the information processing method comprising:

acquiring an evaluation result that indicates evaluation for each of a plurality of indexes in a machine learning model;
clustering the evaluation result for each combination pattern of the plurality of indexes;
calculating a variance of the evaluation results in a cluster for each combination pattern;
determining a combination pattern that satisfies a predetermined condition, from among a plurality of the combination patterns, based on the calculated variance of the evaluation results;
aggregating the evaluation for each of the plurality of indexes for each cluster, based on the evaluation result included in each cluster obtained by performing clustering on the determined combination pattern; and
determining a solution for each of the plurality of indexes in the machine learning model based on the aggregated evaluation for each of the plurality of indexes.

6. The information processing method according to claim 5, wherein
the processing of determining the combination pattern determines a pattern with a minimum variance of the evaluation results from among the plurality of combination patterns.

7. The information processing method according to claim 5, wherein
the processing of determining the solution determines a solution that has a Euclidean distance close to the evaluation for each of the plurality of indexes, from among an answer set of each of the plurality of indexes in the machine learning model.

8. The information processing method according to claim 5, wherein
the evaluation result is a questionnaire result for a person related to determination by using the machine learning model.

9. An information processing device comprising:
a control unit configured to execute processing comprising:

acquiring an evaluation result that indicates evaluation for each of a plurality of indexes in a machine learning model;
clustering the evaluation result for each combination pattern of the plurality of indexes;
calculating a variance of the evaluation results in a cluster for each combination pattern;
determining a combination pattern that satisfies a predetermined condition, from among a plurality of the combination patterns, based on the calculated variance of the evaluation results;
aggregating the evaluation for each of the plurality of indexes for each cluster, based on the evaluation result included in each cluster obtained by performing clustering on the determined combination pattern; and
determining a solution for each of the plurality of indexes in the machine learning model based on the aggregated evaluation for each of the plurality of indexes.

10. The information processing device according to claim 9, wherein

the processing of determining the combination pattern determines a pattern with a minimum variance of the evaluation results from among the plurality of combination patterns.

11. The information processing device according to claim 9, wherein the processing of determining the solution determines a solution that has a Euclidean distance close to the evaluation for each of the plurality of indexes, from among an answer set of each of the plurality of indexes in the machine learning model.

12. The information processing device according to claim 9, wherein the evaluation result is a questionnaire result for a person related to determination by using the machine learning model.

# FIG. 1

100

**MODEL ADJUSTMENT DEVICE** ⌐3

**CLUSTERING UNIT** ⌐30

**CLUSTERING CALCULATION UNIT** ⌐30a

**EUCLIDEAN DISTANCE CALCULATION UNIT** ⌐30b

**INTRA-CLUSTER VARIANCE CALCULATION UNIT** ⌐30c

**VARIANCE MINIMUM VALUE CALCULATION UNIT** ⌐30d

**INTRA-CLUSTER PREFERENCE VALUE CALCULATION UNIT** ⌐31

**CLUSTER OVERALL PREFERENCE VALUE CALCULATION UNIT** ⌐32

**PARETO SOLUTION CALCULATION UNIT** ⌐33

**INDEX PARAMETER SET** ⌐34

**MODEL TRAINING DEVICE** ⌐1

**MODEL TRAINING UNIT** ⌐10

PAST CASE DATA

⌐10a

MODEL

⌐10b

**PARETO SURFACE DATA** ⌐11

**QUESTIONNAIRE DEVICE** ⌐2

**QUESTIONNAIRE UNIT** ⌐20

STAKEHOLDER

⌐20a

SELECT BALANCE OF INDEX

UI ⌐20b

**STAKEHOLDER PREFERENCE DATA** ⌐21

# FIG. 2

```
        ┌─────────────┐
        │    START    │
        └─────────────┘
               │
               ▼           ⌐S1
        ┌──────────────────────┐
        │     TRAIN MODEL      │
        └──────────────────────┘
               │
               ▼           ⌐S2
        ┌──────────────────────┐
        │ CONDUCT QUESTIONNAIRE │
        └──────────────────────┘
               │
               ▼           ⌐S3
        ┌──────────────────────┐
        │ CALCULATE CLUSTERING │
        └──────────────────────┘
               │
               ▼           ⌐S4
        ┌──────────────────────────┐
        │ CALCULATE EUCLIDEAN DISTANCE │
        └──────────────────────────┘
               │
               ▼           ⌐S5
        ┌──────────────────────────────┐
        │ CALCULATE INTRA-CLUSTER VARIANCE │
        └──────────────────────────────┘
               │
               ▼           ⌐S6
        ┌──────────────────────────────┐
        │ CALCULATE INTRA-CLUSTER VARIANCE │
        │      AVERAGE MINIMUM VALUE     │
        └──────────────────────────────┘
               │
               ▼           ⌐S7
        ┌──────────────────────────────┐
        │ CALCULATE INTRA-CLUSTER PREFERENCE │
        │             VALUE              │
        └──────────────────────────────┘
               │
               ▼           ⌐S8
        ┌──────────────────────────────┐
        │ CALCULATE CLUSTER OVERALL PREFERENCE │
        │             VALUE              │
        └──────────────────────────────┘
               │
               ▼           ⌐S9
        ┌──────────────────────────────┐
        │  CALCULATE PARETO SOLUTION   │
        └──────────────────────────────┘
               │
               ▼
        ┌─────────────┐
        │     END     │
        └─────────────┘
```

# FIG. 3

PAST CASE
DATA

⌐10a

MODEL

⌐10b

⌐11

PARETO
SURFACE DATA

| INDEX VALUE | | | |
|---|---|---|---|
| M=1 | M=2 | M=3 | M=4 |
| 0.1 | 0.8 | 0.1 | 0.8 |
| 0.2 | 0.7 | 0.2 | 0.7 |
| 0.3 | 0.6 | 0.3 | 0.6 |
| 0.4 | 0.5 | 0.4 | 0.5 |
| 0.5 | 0.4 | 0.5 | 0.4 |
| 0.6 | 0.3 | 0.6 | 0.3 |
| 0.7 | 0.2 | 0.7 | 0.2 |
| 0.8 | 0.1 | 0.8 | 0.1 |
| ... | ... | ... | ... |

REPEATEDLY TRAIN
WHILE CHANGING
PARAMETERS OF m
INDEXES

ACQUIRE TABLE
DATA OF
m-DIMENSIONAL
PARETO SURFACE

DATA SIZE (ROW) IS NUMBER OF
TIMES OF REPETITIVE TRAINING

# FIG. 4

STAKEHOLDER
20a
i=1,..., 10

SELECT BALANCE OF INDEX

UI (SLIDER)
20b

EXAMPLE) BALANCE OF INDEX SELECTED BY i = 1
0.0    0.5    1.0
INDEX M=1
INDEX M=2
INDEXM=3
INDEX M=4

TABULATE AS INPUT DATA

21

| | STAKEHOLDER GROUP | PREFERENCE VALUE (ViM) OF EACH INDEX OF INDIVIDUAL i | | | |
|---|---|---|---|---|---|
| | | M=1 | M=2 | M=3 | M=4 |
| i=1 | RECRUITER | 0.1 | 0.8 | 0.7 | 0.2 |
| i=2 | RECRUITER | 0.2 | 0.7 | 0.7 | 0.2 |
| i=3 | RECRUITER | 0.3 | 0.6 | 0.7 | 0.2 |
| i=4 | JOB SEEKER | 0.4 | 0.5 | 0.6 | 0.3 |
| i=5 | JOB SEEKER | 0.5 | 0.4 | 0.6 | 0.3 |
| i=6 | JOB SEEKER | 0.6 | 0.3 | 0.7 | 0.2 |
| i=7 | JOB SEEKER | 0.7 | 0.2 | 0.6 | 0.3 |
| i=8 | JOB SEEKER | 0.8 | 0.1 | 0.4 | 0.5 |
| i=9 | JOB SEEKER | 0.1 | 0.8 | 0.4 | 0.5 |
| i=10 | JOB SEEKER | 0.2 | 0.2 | 0.4 | 0.5 |

PREFERENCES OF INDIVIDUALS i = 4 AND 5 HAVE DIFFERENT PREFERENCE PATTERN FROM OTHER INDIVIDUAL OF JOB SEEKER

PREFERENCES OF INDIVIDUALS i = 9 AND 10 HAVE DIFFERENT PREFERENCE PATTERN FROM OTHER INDIVIDUAL OF JOB SEEKER

CLASSIFICATION BASED ON EXTERNAL DATA

ALTHOUGH PREFERENCE PATTERN WITH INDEXES M = 1 AND 2 HAS LARGE DIFFERENCE BETWEEN INDIVIDUALS, PREFERENCE PATTERN WITH INDEXES M = 3 AND 4 HAS SMALL DIFFERENCE BETWEEN INDIVIDUALS

# FIG. 5

OUTPUT RESULT (Kp) OF CLUSTERING IN EACH PATTERN (p) WITH CHANGED COMBINATION OF INDEXES　30e

| | P=1 (M=1,2,3,4) | P=2 (M=1,2,3) | P=3 (M=1,2,4) | P=4 (M=1,3,4) | P=5 (M=2,3,4) | P=6 (M=1,2) | P=7 (M=1,3) | P=8 (M=1,4) | P=9 (M=2,3) | P=10 (M=2,4) | P=11 (M=3,4) | P=12 (M=1) | P=13 (M=2) | P=14 (M=3) | P=15 (M=4) |
|---|---|---|---|---|---|---|---|---|---|---|---|---|---|---|---|
| | $K_1$ | $K_2$ | $K_3$ | $K_4$ | $K_5$ | $K_6$ | $K_7$ | $K_8$ | $K_9$ | $K_{10}$ | $K_{11}$ | $K_{12}$ | $K_{13}$ | $K_{14}$ | $K_{15}$ |
| i=1 | 2 | 1 | 0 | 2 | 2 | 0 | 2 | 2 | 2 | 2 | 0 | 0 | 0 | 0 | 0 |
| i=2 | 2 | 1 | 0 | 2 | 2 | 0 | 2 | 2 | 2 | 2 | 0 | 0 | 0 | 0 | 0 |
| i=3 | 2 | 1 | 2 | 2 | 2 | 2 | 2 | 2 | 2 | 2 | 0 | 2 | 2 | 0 | 0 |
| i=4 | 1 | 0 | 2 | 0 | 1 | 2 | 1 | 1 | 1 | 1 | 0 | 2 | 2 | 0 | 0 |
| i=5 | 1 | 0 | 2 | 0 | 1 | 2 | 1 | 1 | 1 | 1 | 0 | 2 | 2 | 0 | 0 |
| i=6 | 1 | 0 | 2 | 0 | 1 | 1 | 1 | 1 | 1 | 1 | 0 | 1 | 1 | 0 | 0 |
| i=7 | 0 | 2 | 1 | 0 | 1 | 1 | 0 | 0 | 0 | 0 | 0 | 1 | 1 | 0 | 0 |
| i=8 | 0 | 2 | 1 | 3 | 3 | 1 | 0 | 0 | 0 | 0 | 1 | 1 | 1 | 1 | 1 |
| i=9 | 3 | 1 | 0 | 1 | 0 | 0 | 3 | 3 | 3 | 3 | 1 | 0 | 0 | 1 | 1 |
| i=10 | 3 | 1 | 0 | 1 | 0 | 0 | 3 | 3 | 3 | 3 | 1 | 0 | 0 | 1 | 1 |

# FIG. 6

\* ARROW INDICATES FLOW OF CALCULATION     CALCULATION OF dPKi

30f

| | PREFERENCE VALUE OF EACH INDEX OF INDIVIDUAL i ($V_{iM}$) | | | | AVERAGE VALUE ViM OF PREFERENCE VALUES OF ALL INDIVIDUALS $\overline{V}_{iM}$ | | | | $(V_{iM}-\overline{V}_{iM})^2$ | | | | $d_{Pi}=d_{PKi}$ |
|---|---|---|---|---|---|---|---|---|---|---|---|---|---|
| | M=1 | M=2 | M=3 | M=4 | $\overline{V}_{i1}$ | $\overline{V}_{i2}$ | $\overline{V}_{i3}$ | $\overline{V}_{i4}$ | $(V_{i1}-\overline{V}_{i1})^2$ | $(V_{i2}-\overline{V}_{i2})^2$ | $(V_{i3}-\overline{V}_{i3})^2$ | $(V_{i4}-\overline{V}_{i4})^2$ | |
| i=1 | 0.1 | 0.8 | 0.7 | 0.2 | 0.39 | 0.51 | 0.58 | 0.32 | 0.0841 | 0.0841 | 0.0144 | 0.0144 | 0.444 |
| i=2 | 0.2 | 0.7 | 0.7 | 0.2 | 0.39 | 0.51 | 0.58 | 0.32 | 0.0361 | 0.0361 | 0.0144 | 0.0144 | 0.318 |
| i=3 | 0.3 | 0.6 | 0.7 | 0.2 | 0.39 | 0.51 | 0.58 | 0.32 | 0.0081 | 0.0081 | 0.0144 | 0.0144 | 0.212 |
| i=4 | 0.4 | 0.5 | 0.6 | 0.3 | 0.39 | 0.51 | 0.58 | 0.32 | 0.0001 | 0.0001 | 0.0004 | 0.0004 | 0.032 |
| i=5 | 0.5 | 0.4 | 0.6 | 0.3 | 0.39 | 0.51 | 0.58 | 0.32 | 0.0121 | 0.0121 | 0.0004 | 0.0004 | 0.158 |
| i=6 | 0.6 | 0.3 | 0.7 | 0.2 | 0.39 | 0.51 | 0.58 | 0.32 | 0.0441 | 0.0441 | 0.0144 | 0.0144 | 0.342 |
| i=7 | 0.7 | 0.2 | 0.6 | 0.3 | 0.39 | 0.51 | 0.58 | 0.32 | 0.0961 | 0.0961 | 0.0004 | 0.0004 | 0.439 |
| i=8 | 0.8 | 0.1 | 0.4 | 0.5 | 0.39 | 0.51 | 0.58 | 0.32 | 0.1681 | 0.1681 | 0.0324 | 0.0324 | 0.633 |
| i=9 | 0.1 | 0.8 | 0.4 | 0.5 | 0.39 | 0.51 | 0.58 | 0.32 | 0.0841 | 0.0841 | 0.0324 | 0.0324 | 0.483 |
| i=10 | 0.2 | 0.7 | 0.4 | 0.5 | 0.39 | 0.51 | 0.58 | 0.32 | 0.0361 | 0.0361 | 0.0324 | 0.0324 | 0.370 |

# FIG. 7

30f / 30g — CALCULATION OF $\overline{d_{PKi}}$

| | $d_{P1}=d_{PKi}$ | P=1 (M=1,2,3,4) | | | P=6 (M=1,2) | | | P=12 (M=1) | | P=13 (M=2) | | |
| | | $K_1$ | $\overline{d_{1Ki}}$ | ... | $K_6$ | $\overline{d_{6Ki}}$ | ... | $K_{12}$ | $\overline{d_{12Ki}}$ | $K_{13}$ | $\overline{d_{13Ki}}$ | ... |
|---|---|---|---|---|---|---|---|---|---|---|---|---|
| i=1 | 0.444 | 2 | 0.325 | ... | 0 | 0.404 | ... | 0 | 0.404 | 0 | 0.404 | ... |
| i=2 | 0.318 | 2 | 0.325 | ... | 0 | 0.404 | ... | 0 | 0.404 | 0 | 0.404 | ... |
| i=3 | 0.212 | 2 | 0.325 | ... | 2 | 0.134 | ... | 2 | 0.134 | 2 | 0.134 | ... |
| i=4 | 0.032 | 1 | 0.177 | ... | 2 | 0.134 | ... | 2 | 0.134 | 2 | 0.134 | ... |
| i=5 | 0.158 | 1 | 0.177 | ... | 2 | 0.134 | ... | 2 | 0.134 | 2 | 0.134 | ... |
| i=6 | 0.342 | 1 | 0.177 | ... | 1 | 0.472 | ... | 1 | 0.472 | 1 | 0.472 | ... |
| i=7 | 0.439 | 0 | 0.536 | ... | 1 | 0.472 | ... | 1 | 0.472 | 1 | 0.472 | ... |
| i=8 | 0.633 | 0 | 0.536 | ... | 1 | 0.472 | ... | 1 | 0.472 | 1 | 0.472 | ... |
| i=9 | 0.483 | 3 | 0.426 | ... | 0 | 0.404 | ... | 0 | 0.404 | 0 | 0.404 | ... |
| i=10 | 0.370 | 3 | 0.426 | ... | 0 | 0.404 | ... | 0 | 0.404 | 0 | 0.404 | ... |

→

30h — CALCULATION OF $s^2_{PK}$

| | P=1 (M=1,2,3,4) | | | P=6 (M=1,2) | | | P=12 (M=1) | | P=13 (M=2) | | |
| | $K_1$ | $s^2_{1K}$ | ... | $K_6$ | $s^2_{6K}$ | ... | $K_{12}$ | $s^2_{12K}$ | $K_{13}$ | $s^2_{13K}$ | ... |
|---|---|---|---|---|---|---|---|---|---|---|---|
| i=1 | 2 | 0.0142 | ... | 0 | 0.0016 | ... | 0 | 0.0016 | 0 | 0.0016 | ... |
| i=2 | 2 | 0.0000 | ... | 0 | 0.0074 | ... | 0 | 0.0074 | 0 | 0.0074 | ... |
| i=3 | 2 | 0.0126 | ... | 2 | 0.0061 | ... | 2 | 0.0061 | 2 | 0.0061 | ... |
| i=4 | 1 | 0.0212 | ... | 2 | 0.0105 | ... | 2 | 0.0105 | 2 | 0.0105 | ... |
| i=5 | 1 | 0.0004 | ... | 2 | 0.0006 | ... | 2 | 0.0006 | 2 | 0.0006 | ... |
| i=6 | 1 | 0.0272 | ... | 1 | 0.0168 | ... | 1 | 0.0168 | 1 | 0.0168 | ... |
| i=7 | 0 | 0.0094 | ... | 1 | 0.0010 | ... | 1 | 0.0010 | 1 | 0.0010 | ... |
| i=8 | 0 | 0.0094 | ... | 1 | 0.0261 | ... | 1 | 0.0261 | 1 | 0.0261 | ... |
| i=9 | 3 | 0.0032 | ... | 0 | 0.0063 | ... | 0 | 0.0063 | 0 | 0.0063 | ... |
| i=10 | 3 | 0.0032 | ... | 0 | 0.0011 | ... | 0 | 0.0011 | 0 | 0.0011 | ... |

# FIG. 8

CALCULATION OF $s^2_{pk}$

30i

| | P=1 (M=1,2,3,4) | P=2 (M=1,2,3) | P=3 (M=1,2,4) | P=4 (M=1,3,4) | P=5 (M=2,3,4) | P=6 (M=1,2) | P=7 (M=1,3) | P=8 (M=1,4) | P=9 (M=2,3) | P=10 (M=2,4) | P=11 (M=3,4) | P=12 (M=1) | P=13 (M=2) | P=14 (M=3) | P=15 (M=4) |
|---|---|---|---|---|---|---|---|---|---|---|---|---|---|---|---|
| | $K_1$ | $K_2$ | $K_3$ | $K_4$ | $K_5$ | $K_6$ | $K_7$ | $K_8$ | $K_9$ | $K_{10}$ | $K_{11}$ | $K_{12}$ | $K_{13}$ | $K_{14}$ | $K_{15}$ |
| $s^2_{p1}$ | 0.0094 | 0.0162 | 0.0041 | 0.0251 | 0.0037 | 0.0041 | 0.0094 | 0.0094 | 0.0094 | 0.0094 | 0.0198 | 0.0041 | 0.0041 | 0.0198 | 0.0198 |
| $s^2_{p2}$ | 0.0162 | 0.0091 | 0.0094 | 0.0032 | 0.0251 | 0.0147 | 0.0162 | 0.0162 | 0.0162 | 0.0162 | 0.0116 | 0.0147 | 0.0147 | 0.0186 | 0.0186 |
| $s^2_{p3}$ | 0.0090 | 0.0094 | 0.0124 | 0.0090 | 0.0090 | 0.0057 | 0.0090 | 0.0090 | 0.0090 | 0.0090 | | 0.0057 | 0.0057 | | |
| $s^2_{p4}$ | 0.0032 | | | 0.0000 | 0.0000 | | 0.0032 | 0.0032 | 0.0032 | 0.0032 | | | | | |
| $\text{Mean}_p$ | 0.0094 | 0.0116 | 0.0086 | 0.0093 | 0.0094 | 0.0082 | 0.0094 | 0.0094 | 0.0094 | 0.0094 | 0.0157 | 0.0082 | 0.0082 | 0.0192 | 0.0192 |

⬇

30j

| P=6 (M=1,2) | P=12 (M=1) | P=13 (M=2) |
|---|---|---|
| $K_6$ | $K_{12}$ | $K_{13}$ |
| 0.0082 | 0.082 | 0.0082 |

# FIG. 9

| | STAKEHOLDER GROUP | PREFERENCE VALUE OF EACH INDEX OF INDIVIDUAL i ($V_{iM}$) | | | | P=6 (M=1,2) |
|---|---|---|---|---|---|---|
| | | M=1 | M=2 | M=3 | M=4 | $K_6$ |
| i=1 | RECRUITER | 0.1 | 0.8 | 0.7 | 0.2 | 0 |
| i=2 | RECRUITER | 0.2 | 0.7 | 0.7 | 0.2 | 0 |
| i=3 | JOB SEEKER | 0.3 | 0.6 | 0.7 | 0.2 | 2 |
| i=4 | JOB SEEKER | 0.4 | 0.5 | 0.6 | 0.3 | 2 |
| i=5 | JOB SEEKER | 0.5 | 0.4 | 0.6 | 0.3 | 2 |
| i=6 | JOB SEEKER | 0.6 | 0.3 | 0.7 | 0.2 | 1 |
| i=7 | JOB SEEKER | 0.7 | 0.2 | 0.6 | 0.3 | 1 |
| i=8 | JOB SEEKER | 0.8 | 0.1 | 0.4 | 0.5 | 1 |
| i=9 | JOB SEEKER | 0.1 | 0.8 | 0.4 | 0.5 | 0 |
| i=10 | JOB SEEKER | 0.2 | 0.2 | 0.4 | 0.5 | 0 |

30k

CLASSIFICATION BASED ON EXTERNAL DATA

ALTHOUGH PREFERENCE PATTERN WITH INDEXES M = 1 AND 2 HAS LARGE DIFFERENCE BETWEEN INDIVIDUALS, PREFERENCE PATTERN WITH INDEXES M = 3 AND 4 HAS SMALL DIFFERENCE BETWEEN INDIVIDUALS

PREFERENCES OF INDIVIDUALS i = 4 AND 5 HAVE DIFFERENT PREFERENCE PATTERN FROM OTHER INDIVIDUAL OF JOB SEEKER

PREFERENCES OF INDIVIDUALS i = 9 AND 10 HAVE DIFFERENT PREFERENCE PATTERN FROM OTHER INDIVIDUAL OF JOB SEEKER

AGGREGATE

| | AVERAGE VALUE OF EACH INDEX ($V_{PKM}$) | | | |
|---|---|---|---|---|
| | M=1 | M=2 | M=3 | M=4 |
| CLUSTER 0 i=1,2,9,10 | 0.15 | 0.75 | 0.55 | 0.35 |
| CLUSTER 1 i=6,7,8 | 0.70 | 0.20 | 0.57 | 0.33 |
| CLUSTER i=3,4,5 | 0.40 | 0.50 | 0.63 | 0.23 |

30l

FIG. 10

301

| | AVERAGE VALUE OF EACH INDEX ($V_{PKM}$) | | | |
|---|---|---|---|---|
| | M=1 | M=2 | M=3 | M=4 |
| CLUSTER 0 i=1,2,9,10 | 0.15 | 0.75 | 0.55 | 0.35 |
| CLUSTER 1 i=6,7,8 | 0.70 | 0.20 | 0.57 | 0.33 |
| CLUSTER 2 i=3,4,5 | 0.40 | 0.50 | 0.63 | 0.23 |

AGGREGATE

30m

| | M=1 | M=2 | M=3 | M=4 |
|---|---|---|---|---|
| $V_{ave\ PKM}$ | 0.35 | 0.42 | 0.58 | 0.30 |

SELECTION OF PARETO SOLUTION

34

| | M=1 | M=2 | M=3 | M=4 |
|---|---|---|---|---|
| $V_{ave\ PKM}$ | 0.4 | 0.5 | 0.6 | 0.3 |

# FIG. 11

Table 30k:

| | STAKEHOLDER GROUP | PREFERENCE VALUE OF EACH INDEX OF INDIVIDUAL i ($V_{iM}$) | | | | P=6 (M=1,2) |
|---|---|---|---|---|---|---|
| | | M=1 | M=2 | M=3 | M=4 | $K_6$ |
| i=1 | RECRUITER | 0.1 | 0.8 | 0.7 | 0.2 | 0 |
| i=2 | RECRUITER | 0.2 | 0.7 | 0.7 | 0.2 | 0 |
| i=3 | JOB SEEKER | 0.3 | 0.6 | 0.7 | 0.2 | 2 |
| i=4 | JOB SEEKER | 0.4 | 0.5 | 0.6 | 0.3 | 2 |
| i=5 | JOB SEEKER | 0.5 | 0.4 | 0.6 | 0.3 | 2 |
| i=6 | JOB SEEKER | 0.6 | 0.3 | 0.7 | 0.2 | 1 |
| i=7 | JOB SEEKER | 0.7 | 0.2 | 0.6 | 0.3 | 1 |
| i=8 | JOB SEEKER | 0.8 | 0.1 | 0.4 | 0.5 | 1 |
| i=9 | JOB SEEKER | 0.1 | 0.8 | 0.4 | 0.5 | 0 |
| i=10 | JOB SEEKER | 0.2 | 0.2 | 0.4 | 0.5 | 0 |

CLASSIFICATION BASED ON EXTERNAL DATA

ALTHOUGH PREFERENCE PATTERN WITH INDEXES M = 1 AND 2 HAS LARGE DIFFERENCE BETWEEN INDIVIDUALS, PREFERENCE PATTERN WITH INDEXES M = 3 AND 4 HAS SMALL DIFFERENCE BETWEEN INDIVIDUALS

PREFERENCES OF INDIVIDUALS i = 4 AND 5 HAVE DIFFERENT PREFERENCE PATTERN FROM OTHER INDIVIDUAL OF JOB SEEKER

PREFERENCES OF INDIVIDUALS i = 9 AND 10 HAVE DIFFERENT PREFERENCE PATTERN FROM OTHER INDIVIDUAL OF JOB SEEKER

Table 35a:

| STAKEHOLDER GROUP | PREFERENCE VALUE OF EACH INDEX OF INDIVIDUAL i (Vave PKM) | | | |
|---|---|---|---|---|
| | M=1 | M=2 | M=3 | M=4 |
| RECRUITER | 0.20 | 0.70 | 0.70 | 0.20 |
| JOB SEEKER | 0.47 | 0.43 | 0.53 | 0.37 |

Table 35b (C1):

| | M=1 | M=2 | M=3 | M=4 |
|---|---|---|---|---|
| $V_{ave\ M}$ | 0.34 | 0.57 | 0.62 | 0.29 |

Table 30l:

| | AVERAGE VALUE OF EACH INDEX ($V_{PKM}$) | | | |
|---|---|---|---|---|
| | M=1 | M=2 | M=3 | M=4 |
| CLUSTER 0 i=1,2,9,10 | 0.15 | 0.75 | 0.55 | 0.55 |
| CLUSTER 1 i=6,7,8 | 0.70 | 0.20 | 0.57 | 0.57 |
| CLUSTER 2 i=3,4,5 | 0.40 | 0.50 | 0.63 | 0.63 |

Table 34 (C1):

| | M=1 | M=2 | M=3 | M=4 |
|---|---|---|---|---|
| $V_{ave\ PKM}$ | 0.35 | 0.42 | 0.58 | 0.30 |

# FIG. 12

200

| 201 | 202 | 203 | 204 | 205 |
|-----|-----|-----|-----|-----|
| CPU | INPUT DEVICE | MONITOR | SPEAKER | MEDIUM READING DEVICE |

210

| 206 | 207 | 208 | 209 |
|-----|-----|-----|-----|
| INTERFACE DEVICE | COMMUNICATION DEVICE | RAM | HARD DISK DEVICE |

211

PROGRAM

212

VARIOUS TYPES OF DATA

# EUROPEAN SEARCH REPORT

**Application Number**

EP 24 19 6649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAKAO YURI ET AL: "Towards Responsible AI: A Design Space Exploration of Human-Centered Artificial Intelligence User Interfaces to Investigate Fairness", INTERNATIONAL JOURNAL OF HUMAN-COMPUTER INTERACTION., vol. 39, no. 9, 4 May 2022 (2022-05-04), pages 1762-1788, XP093244214, US ISSN: 1044-7318, DOI: 10.1080/10447318.2022.2067936 * the whole document * | 1-12 | INV. G06N5/045 G06N20/00 |
| X | AHN YONGSU ET AL: "FairSight: Visual Analytics for Fairness in Decision Making", IEEE TRANSACTIONS ON VISUALIZATION AND COMPUTER GRAPHICS, IEEE, USA, vol. 26, no. 1, 1 January 2020 (2020-01-01), pages 1086-1095, XP011752638, ISSN: 1077-2626, DOI: 10.1109/TVCG.2019.2934262 [retrieved on 2019-11-22] * abstract * * Sections 4, 5; figures 1,2; table 1 * | 1-12 | |
| A | HAQ ANWAR UL ET AL: "Combining Multiple Feature-Ranking Techniques and Clustering of Variables for Feature Selection", IEEE ACCESS, vol. 7, 24 October 2019 (2019-10-24), pages 151482-151492, XP011752374, DOI: 10.1109/ACCESS.2019.2947701 [retrieved on 2019-10-24] * abstract * * sections III and IV * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 30 January 2025 | Malatesta, Lori |

EPO FORM 1503 03.82 (P04C01)

## REFERENCES CITED IN THE DESCRIPTION

**Patent documents cited in the description**

- JP 2015087966 A
- JP 2013101700 A
- JP 2007172427 A
- US 20230024361
- US 20160180451